**Europäisches Patentamt**

**European Patent Office**

**Office européen des brevets**

(19)

(11) Numéro de publication: **0 190 519**
**B1**

(12)

# FASCICULE DE BREVET EUROPEEN

(45) Date de publication du fascicule du brevet:
**01.03.89**

(51) Int. Cl.⁴: **C 03 B 37/16**

(21) Numéro de dépôt: **85402395.9**

(22) Date de dépôt: **03.12.85**

(54) Procédé de dénudage de fibres optiques, et dispositif de mise en oeuvre de ce procédé.

(30) Priorité: **06.12.84 FR 8418641**

(43) Date de publication de la demande:
**13.08.86 Bulletin 86/33**

(45) Mention de la délivrance du brevet:
**01.03.89 Bulletin 89/9**

(84) Etats contractants désignés:
**DE GB**

(56) Documents cités:
**EP-A- 0 036 212**

**PATENTS ABSTRACTS OF JAPAN, vol. 3, no. 40, 6 avril 1979, page 71 E 102; & JP - A - 54 18 758 (HITACHI DENSEN K.K.) 13-02-1979
PATENTS ABSTRACTS OF JAPAN, vol. 3, no. 52, 7 mai 1979, page 143 E 108; & JP - A - 54 31 754 (FUJIKURA DENSEN K.K.) 08-03-1979**

(73) Titulaire: **SOCAPEX, 10 bis, quai Léon Blum, F-92153 Suresnes (FR)**

(72) Inventeur: **Lecomte, Joel, THOMSON-CSF SCPI 173, bld Haussmann, F-75379 Paris Cedex 08 (FR)**
Inventeur: **Chirot, Pascal, THOMSON-CSF SCPI 173, bld Haussmann, F-75379 Paris Cedex 08 (FR)**

(74) Mandataire: **Hasenrader, Hubert et al, Cabinet BEAU DE LOMENIE 55, rue d'Amsterdam, F-75008 Paris (FR)**

## Description

L'invention se rapporte au dénudage de l'enduction des fibres optiques par action d'un produit chimique décapant.

Pour procéder au dénudage de l'enduction des fibres optiques qui recouvre leur gaine optique, on peut utiliser plusieurs méthodes ou outillages. Il existe trois types de méthodes: les méthodes mécaniques, les méthodes thermiques et les méthodes chimiques. Les systèmes de dénudage mécanique utilisent des lames tranchantes pour retirer la couche protectrice. L'inconvénient majeur de ces systèmes provient des coupures pratiquement inévitables laissées dans la fibre lors du dénudage. Ces coupures peuvent entraîner des cassures de la fibre.

Les systèmes de dénudage thermique sont sans précision quant aux longueurs dénudées, sauf à utiliser en complément un dispositif à lame tranchante, comme illustré dans le document JP-A-54-18758, mais au risque de rencontrer les inconvénients précités.

Le dénudage chimique évite ce type d'inconvénient. Comme illustré dans la demande EP-A1-0 036 212, il consiste à badigeonner l'extrémité de la fibre optique que l'on veut dénuder à l'aide d'un produit chimique décapant ou à immerger cette extrémité dans un récipient contenant le produit. L'opération de dénudage chimique comporte d'autres inconvénients que le dénudage mécanique. Les produits décapants utilisables (chlorure de méthylène ou produits à base de phénol) pour éliminer l'enduction généralement en époxy sont des produits dangereux. Leur utilisation est donc délicate surtout lorsque le dénudage est à faire sur le terrain. En outre, cette méthode reste imprécise alors que le dénudage de la fibre est souvent à effectuer selon une cote fixe.

Afin de pallier ces inconvénients, l'invention propose un procédé de dénudage chimique à cote fixe et sans manipulation de l'agent chimique décapant. L'invention permet d'obtenir le dénudage et le nettoyage d'une ou de plusieurs fibres. Le produit décapant est contenu dans un récipient fermé hermétiquement par une membrane qui peut être perforée localement pour l'introduction d'une longueur déterminée de l'extrémité de la fibre à dénuder.

L'invention a donc pour objet un procédé de dénudage de l'enduction d'au moins une fibre optique par un produit chimique décapant, contenu dans un récipient, comprenant les étapes suivantes:

— introduction d'une longueur déterminée de la fibre dans le produit chimique,

— immersion de ladite longueur pendant un temps prédéterminé,

— retrait et nettoyage de la longueur immergée de la fibre, comme il est connu du document EL-A1-0036212, qui est caractérisé en ce qu'on utilise un récipient fermé par une membrane élastique et que, préalablement à l'introduction de la fibre dans le produit chimique, on présente l'extrémité de la fibre en contact avec la membrane élastique et on perfore la membrane pour introduire la fibre, l'enduction de la fibre étant retenue par la membrane à l'intérieur du récipient lors du retrait de la fibre.

L'invention a aussi pour objet un dispositif de dénudage de l'enduction d'au moins une fibre optique par un produit chimique décapant, comprenant:

— un récipient contenant ledit produit chimique,

— des moyens de préhension de la fibre optique à dénuder, qui est connu du document EP-A1-0 036 212, qui est caractérisé en ce que le récipient est fermé par une membrane élastique perforable pour l'introduction de ladite fibre optique et en ce que le dispositif comprend des moyens de transport de la fibre sur une longueur déterminée.

L'invention sera mieux comprise et d'autres avantages apparaîtront au moyen de la description qui va suivre et des figures annexées parmi lesquelles:

la figure 1 est illustrative du mode opératoire selon l'invention;

la figure 2 représente un dispositif de dénudage chimique selon l'invention;

la figure 3 représente une variante d'un dispositif de dénudage selon l'invention;

la figure 4 représente également une variante d'un dispositif de dénudage selon l'invention.

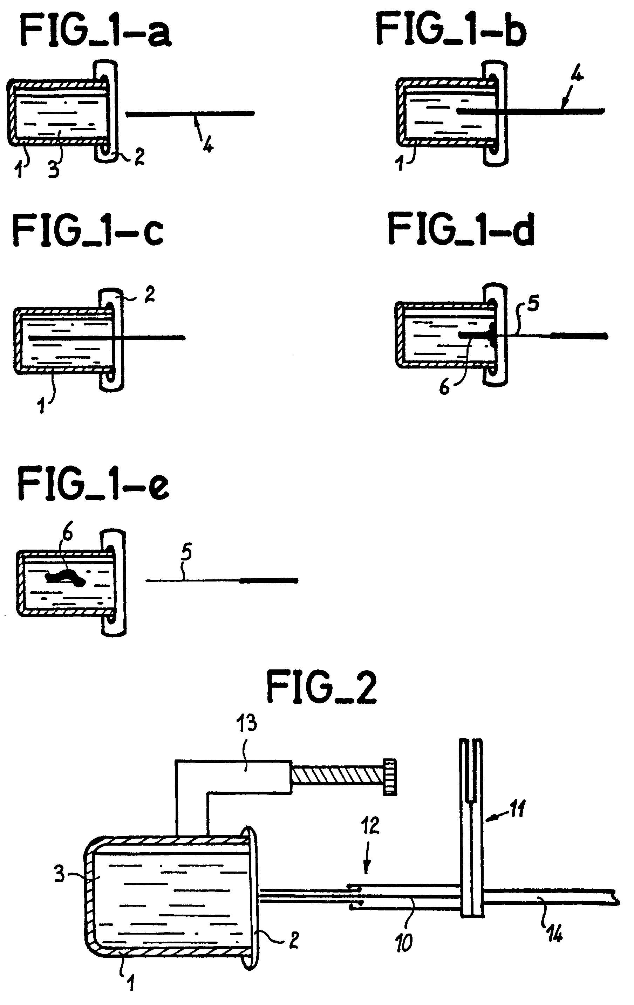

La figure 1 est illustrative du mode opératoire selon l'invention. Sur la figure 1a, on a représenté un récipient 1 qui a par exemple la forme d'un tube et qui est fermé par une membrane 2 élastique. Le récipient est rempli par un produit chimique 3 capable de dissoudre ou de désagréger l'enduction d'une fibre optique 4. Le récipient et sa membrane sont situés de façon à ce que le produit chimique soit en contact avec la membrane, au moins dans la région où la fibre optique sera introduite. Pour obtenir ce résultat, on peut par exemple incliner le récipient à l'horizontale comme cela est représenté sur la figure 1. Ceci est nécessaire si l'on désire obtenir une bonne précision sur la longueur de fibre à dénuder. Le récipient ainsi que sa membrane doivent être réalisés en des matériaux résistant au décapant chimique utilisé. Celui-ci peut être du chlorure de méthylène, un produit à base de phénol ou tout autre produit chimique capable d'éliminer l'enduction (en époxy ou en un matériau jouant le même rôle) et de ne pas détériorer la fibre elle-même. La membrane peut être avantageusement réalisée en fluorosilicone ou en fluorocarbone et le récipient en verre, en polyéthylène ou en aluminium.

La fibre 4 est amenée en contact avec la membrane 2 qu'elle perfore ensuite pour pénétrer à l'intérieur du récipient comme représenté à la figure 1b. Cette perforation peut être réalisée par la fibre seule dans le cas où celle-ci est suffisamment rigide pour ne pas subir un flambage qui pourrait la détériorer. Dans le cas contraire, il est nécessaire d'utiliser un outillage qui sera décrit par la suite.

La fibre optique 4 est introduite dans le décapant selon une certaine longueur qu'il est possible de déterminer à l'avance. On laisse agir le décapant le temps nécessaire à son action et qui est fonction de l'épaisseur de l'enduction, de l'âge de la fibre et de la nature du décapant. C'est ce que représente la figure 1c.

Une fois que le décapant a fait son œuvre, la fibre peut être retirée comme illustré par la figure 1d. Au cours de cette étape, la membrane a un autre rôle à jouer: celui de nettoyer la fibre de la partie de l'enduction qui a subi l'action du décapant. Ceci est réalisé par un simple retrait de la fibre. En effet, la membrane de par sa nature élastique se resserre autour de la fibre et retient dans le récipient l'enduction 6 correspondant à la zone nettoyée 5. A la figure 1e, l'extrémité de la fibre 4 est dénudée, l'enduction 6 est restée à l'intérieur du récipient qui reste disponible pour une autre opération.

Si le produit chimique décapant est sensible à la lumière, le récipient sera choisi en un matériau opaque. Sa contenance sera en rapport avec le nombre d'opérations de dénudage prévues et selon la longueur de dénudage à effectuer. La membrane fermant le récipient permet d'éviter le contact direct entre l'utilisateur et le décapant, de nettoyer la fibre de son enduction et peut assurer la tenue d'une cote fixe de dénudage. Par mesure de sécurité, le montage de la membrane peut être prévu pour qu'on ne puisse pas l'enlever facilement.

La membrane 2 peut être percée plusieurs fois sans inconvénient.

La membrane, ou tout autre élément de fermeture du récipient, peut être soit percutable par la fibre directement ou non, soit déjà fendue. Ce peut être alors une lèvre qui s'ouvre par déformation et qui se referme lorsque l'on a retiré l'objet cause de la déformation.

Le dispositif de mise en œuvre du dénudage peut comporter d'autres éléments, notamment dans le cas où la fibre optique étant trop fine, il est nécessaire de prévoir des éléments de guidage afin d'éviter le flambage de la fibre lors de la perforation de la membrane.

Une solution possible pour éviter le flambage consiste à utiliser des fourreaux coulissants.

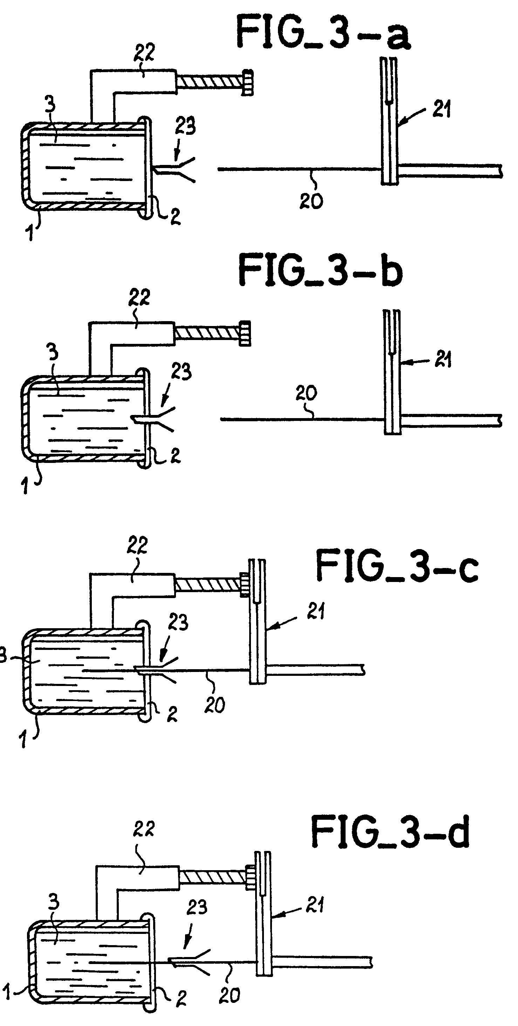

La figure 2 représente schématiquement un dispositif utilisant un mécanisme de guidage à fourreaux coulissants. La fibre optique 10 à dénuder a été dégagée de sa gaine mécanique ou de son tube de protection sur une certaine longueur et est maintenue par une pincette de transport 11 qui évite la manipulation directe de la fibre. L'extrémité de la fibre 10 est placée dans le mécanisme de guidage 12 composé de deux fourreaux coulissants. Ceux-ci sont télescopiques et l'un de ces fourreaux peut être rendu solidaire d'un dispositif de préhension de la pincette 11 et l'autre, de préférence celui de plus petit diamètre, est destiné à venir en contact avec la membrane 2 du récipient 1 contenant le décapant 3. Une butée 13 fixée sur le récipient 1 permet de limiter à une longueur déterminée l'introduction de la fibre dans le récipient. On procédé de la manière suivante. Les fourreaux étant déployés tel que représenté à la figure 2, la fibre y est introduite jusqu'à ce que son extrémité coïncide avec celle du mécanisme de guidage 12 comme le montre la figure 2. La pincette 11 assure le maintien de l'ensemble qui est présenté face à la membrane 2. La distance séparant la butée 13 de la membrane 11 correspond à la longueur à dénuder, à l'épaisseur de la membrane près. La fibre est poussée vers le décapant 3 au moyen de la pincette de transport. Les fourreaux étant tirés à l'origine de l'action, ils empêchent le flambage de la fibre, laquelle peut alors pénétrer à travers la membrane. La fibre peut pénétrer à l'intérieur du récipient 1 jusqu'à ce que la pincette 1 soit arrêtée par la butée 13, c'est-à-dire au maximum de la longueur du fourreau d'extrémité. Le mécanisme de guidage peut éventuellement se composer de plus de deux fourreaux. La suite des opérations s'effectue comme il est indiqué plus haut.

Certains perfectionnements peuvent être apportés au dispositif qui vient d'être décrit. En particulier, la butée peut être réglabe de façon à disposer d'un dispositif de dénudage à longueur variable, ou pour tenir compte de l'épaisseur de la membrane. On peut également introduire, dans le fourreau le plus large, un ressort qui a pour objet de limiter le flambage de la fibre par restriction du diamètre de ce fourreau tout en permettant les mouvements relatifs des deux tubes.

Une solution à percuteur peut être également envisagée. Cette solution est particulièrement intéressante dans le cas du dénudage de fibres très fines. La figure 3 décrit le mode opératoire d'un tel dispositif. Dans cette solution, on retrouve la pincette de transport 21 et la butée 22 solidaire du récipient 1. Sur la figure 3a, on distingue le percuteur 23 en forme d'entonnoir de dimensions très réduites et dont le tube terminal est biseauté de manière à percer plus facilement la membrane 2. Le percuteur peut être relié mécaniquement au récipient 1 tout en restant libre en translation le long d'une perpendiculaire à la membrane 2. Au stade représenté par la figure 3a, le percuteur 23 est placé au contact de la membrane et la fibre 20 est maintenue par la pincette de transport 21. La pincette peut également être solidaire du récipient tout en restant libre en translation comme le percuteur 23.

Au stade représenté à la figure 3b, on pousse le percuteur vers le décapant 3. Le tube du percuteur perce la membrane et prépare ainsi le passage de la fibre 20 placée dans son alignement. Le diamètre du tube du percuteur est suffisamment petit et la viscosité du décapant suffisamment élevée pour qu'il ne se produise pas de fuite de décapant par le percuteur. La pincette est alors avancée pour faire pénétrer la fibre à l'intérieur du récipient jusqu'à ce que la pincette soit arrêtée par la butée 22. Cette opération est représentée à la figure 3c.

Le percuteur est alors retiré de la membrane comme le montre la figure 3d et la membrane se resserre autour de la fibre. On laisse agir le décapant pendant le temps jugé nécessaire pour éliminer l'enduction de l'extrémité de la fibre. Lorsque la fibre est retirée, l'enduction est retenue à l'intérieur du récipient comme précédemment. La longueur de fibre qui doit être dénudée est déterminée par les distances séparant respectivement la membrane 2, la butée 22, la pincette 21 et l'extrémité de la fibre.

L'avantage de ce dispositif est de ne soumettre la fibre à aucun effort mécanique et donc d'être applicable à des fibres très fines.

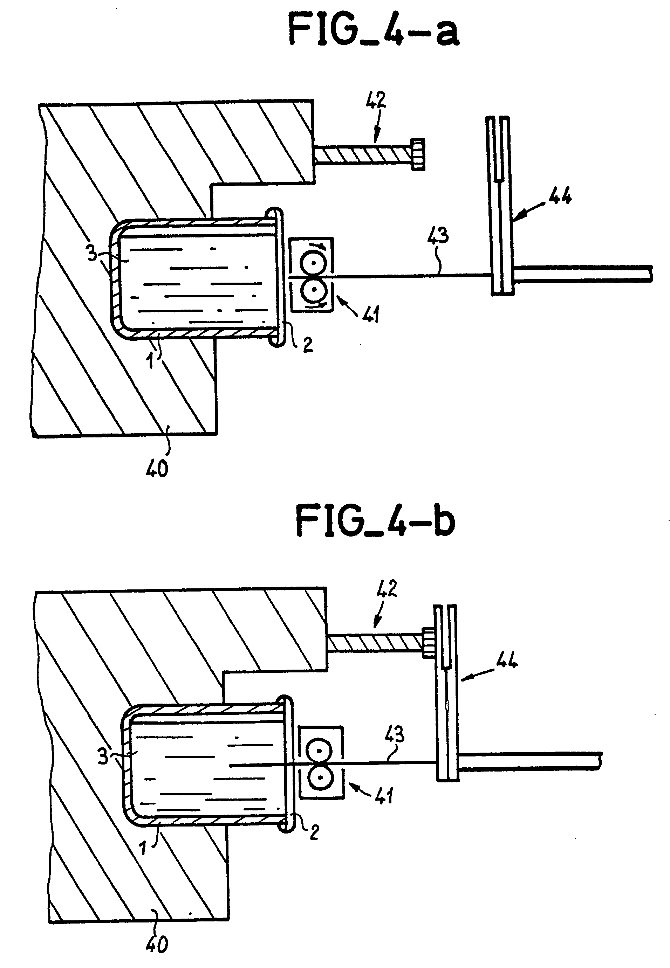

D'autres solutions mécaniques sont encore possibles qui ont comme principe d'éviter le flambage de la fibre lors de la percussion de la membrane. Une solution d'un dispositif à molettes est représentée à la figure 4. Le dispositif comprend un récipient 1 du type déjà décrit fixé dans un support 40 de façon à ce que la membrane 2 soit en contact avec le produit décapant 3. En face de la membrane et à proximité de celle-ci, est disposé un ensemble 41 relié au support 40 par une patte de fixation non représentée. Cet ensemble comprend deux molettes pressées légèrement l'une contre l'autre par un ressort. Une butée 42 est fixée sur le support 40. Elle peut être constituée par une vis afin de pouvoir la rendre réglable. Comme précédemment, la pincette de transport 44 maintient la fibre optique 43, de préférence à l'endroit où subsiste encore la gaine mécanique, à la position voulue pour aborder la membrane. L'extrémité de la fibre dépourvue de la gaine mécanique est introduite entre les molettes et est poussée vers la membrane. Les molettes tournent alors dans le sens indiqué par les flèches et entraînent l'extrémité de la fibre en contact avec la membrane ainsi que le montre la figure 4a. La distance séparant les molettes de la membrane étant relativement faible, on peut ainsi éviter le flambage de la partie de la fibre dépourvue de sa gaine mécanique. Après avoir traversé la membrane, la fibre pénètre dans le récipient jusqu'à ce que la pincette 44 vienne en contact avec la butée 42. La suite des opérations est identique à ce qui a été dit précédemment.

Quel que soit le dispositif employé, différents perfectionnements sont possibles tout en restant dans le cadre de l'invention. Ceux-ci peuvent porter notamment sur la disposition des différents éléments. Le récipient, la butée fixe ou mobile, la pincette ou tout autre moyen de préhension et les différents accessoires utilisés selon les variantes peuvent être fixés sur un même support. Une réglette graduée peut également être disposée parallèlement à la fibre à dénuder afin de régler automatiquement la longueur de fibre à dénuder.

Il entre également dans le cadre de l'invention de dénuder plusieurs fibres à la fois. Dans ce cas, et suivant la variante du dispositif retenue, on prévoira autant d'éléments de guidage des fibres ou de percuteurs de membrane qu'il est nécessaire.

Le dispositif de dénudage selon l'invention peut également être réalisé dans un matériau alvéolaire formant plusieurs contenants pour le décapant, ce matériau étant recouvert d'une membrane isolant les avéoles les unes des autres et constituant autant de bouchons percutables.

## Revendications

1. Procédé de dénudage de l'enduction (6) d'au moins une fibre optique (4; 10; 20; 43) par un produit chimique décapant (3), contenu dans un récipient (1), comprenant les étapes suivantes:
— introduction d'une longueur déterminée de la fibre dans le produit chimique,
— immersion de la dite longueur pendant un temps prédéterminé,
— retrait et nettoyage de la longueur immergée de la fibre,
caractérisé en ce quon utilise un récipient fermé par une membrane élastique (2) et que, préalablement à l'introduction de la fibre dans le produit chimique, on présente l'extrémité de la fibre en contact avec la membrane élastique et on prendre la membrane pour introduire la fibre, l'enduction de la fibre étant retenue par la membrane à l'intérieur du récipient lors du retrait de la fibre.

2. Procédé de dénudage selon la revendication 1, caractérisé en ce que le produit chimique (3) reste en contact avec la membrane (2) pendant la durée de l'opération de dénudage.

3. Dispositif de dénudage de l'enduction (6) d'au moins une fibre optique (4; 10; 20; 43) par un produit chimique décapant (3), comprenant:
— un récipient (1) contenant ledit produit chimique,
— des moyens de préhension (11; 21; 44) de la fibre optique à dénuder,
caractérisé en ce que le récipient est fermé par une membrane élastique (2) perforable pour l'introduction de ladite fibre optique et en ce que le dispositif comprend des moyens de transport (11, 13; 21, 22; 44, 42) de la fibre sur une longueur déterminée.

4. Dispositif selon la revendication 3, caractérisé en ce que la membrane (2) possède une lèvre qui peut s'ouvrir de l'extérieur par pression.

5. Dispositif selon l'une des revendications 3 ou 4, caractérisé en ce que la membrane (2) est en fluorosilicone ou en fluorocarbone.

6. Dispositif selon l'une quelconque des revendications 3 à 5, caractérisé en ce que les moyens de préhension comprennent une pincette de transport (11; 21; 44).

7. Dispositif selon l'une quelconque des revendications 3 à 6, caractérisé en ce que le dispositif comprend en outre une butée (13; 22; 42) permettant de limiter la portion de fibre (10; 20; 43) introduite dans le récipient (1) à une longueur déterminée.

8. Dispositif selon l'une quelconque des revendications 3 à 7, caractérisé en ce qu'il comprend également des éléments de guidage (12; 23; 41) de la fibre (10; 20; 43), ces éléments permettant d'éviter son flambage lors de la percussion de la membrane (2).

9. Dispositif selon la revendication 8, caractérisé en ce que les éléments de guidage sont constitués de fourreaux coulissants (12).

10. Dispositif selon la revendication 8, caractérisé en ce que les éléments de guidage comprennent un percuteur (23) placé entre la membrane (2) et l'extrémité de la fibre à dénuder (20), le percuteur étant destiné à percer la membrane et à la maintenir ouverte pour introduire librement ladite fibre.

11. Dispositif selon la revendication 8, caractérisé en ce que les éléments de guidage comprennent deux molettes (41) placées devant la membrane (2) et destinées à entraîner la fibre (43) vers la membrane.

## Patentansprüche

1. Verfahren zum Entfernen des Überzuges (6) von mindestens einer optischen Faser (4; 10; 20; 43) durch ein chemisches Beizmittel (3) welches in einem Behälter (1) enthalten ist und wobei die folgenden Schritte vorgesehen werden:

— Einführen einer bestimmten Länge der Faser in das chemische Mittel,

— Eintauchen der erwähnten Länge für eine vorbestimmte Zeit,

— Zurückziehen und Reinigen der eingetauchten Faserlänge,

dadurch gekennzeichnet, daß man einen durch eine elastische Membran (2) abgeschlossenen Behälter verwendet und daß vor der Einführung der Faser in das chemische Mittel das Ende der Faser in Berührung mit der elastischen Membran gebracht wird, und daß man die Membran zum Einführen der Faser durchbohrt, wobei der Überzug der Faser während des Zurückziehens der Faser durch die Membran im Inneren des Behälters zurückgehalten wird.

2. Verfahren zum Entfernen nach Anspruch 1, dadurch gekennzeichnet, daß das chemische Mittel (3) während der Dauer des Entfernungsvorgangs in Berührung mit der Membran (2) verbleibt.

3. Vorrichtung zum Entfernen des Überzugs (6) von mindestens einer optischen Faser (4; 10; 20; 43) durch ein chemisches Beizmittel (3), wobei folgendes vorgesehen ist:

— Ein das chemische Mittel enthaltender Behälter (1),

— Mittel (11; 21; 44) zum Ergreifen der optischen Faser zum Zwecke des Freilegens,

dadurch gekennzeichnet, daß der Behälter durch eine elastische Membran (2) abgeschlossen ist und zwar perforierbar durch die Einführung der optischen Faser, und ferner dadurch gekennzeichnet, daß die Vorrichtung Transportmittel (11, 13; 21, 22; 44, 42) der Faser auf eine bestimmte Länge aufweist.

4. Vorrichtung nach Anspruch 3, dadurch gekennzeichnet, daß die Membran (2) einen Rand aufweist, der sich durch Druck nach außen öffnen kann.

5. Vorrichtung nach einem der Ansprüche 3 und 4, dadurch gekennzeichnet, daß die Membran (2) ein Fluorosilikon oder ein Fluorkohlenwasserstoff ist.

6. Vorrichtung nach einem der Ansprüche 3 bis 5, dadurch gekennzeichnet, daß die Greifmittel eine Transportpinsette (11; 21; 44) aufweisen.

7. Vorrichtung nach einem der Ansprüche 3 bis 6, dadurch gekennzeichnet, daß die Vorrichtung einen Anschlag (13; 22; 42) aufweist, der es gestattet, den in den Behälter (1) eingeführten Teil der Faser (10; 20; 43) auf eine bestimmte Länge zu begrenzen.

8. Vorrichtung nach einem der Ansprüche 3 bis 7, dadurch gekennzeichnet, daß Führungsmittel (12; 23; 41) für die Faser (10; 20; 43) vorgesehen sind, wobei diese Elemente das Knicken währen des Durchlochens der Membran (2) vermeiden.

9. Vorrichtung nach Anspruch 8, dadurch gekennzeichnet, daß die Führungselemente durch Gleitrohre (12) gebildet sind.

10. Vorrichtung nach Anspruch 8, dadurch gekennzeichnet, daß die Führungselemente einen Locher (23) aufweisen, angeordnet zwischen der Membran (2) und dem Ende der freizulegenden Faser (20), wobei der Locher dazu dient, die Membran zu durchbohren und zum freien Einführen der Faser freizuhalten.

11. Vorrichtung nach Anspruch 8, dadurch gekennzeichnet, daß die Führungselemente zwei vor der Membran (2) angeordnete Rollen (41) aufweisen, und zwar bestimmt zum Transport der Faser (43) zur Membran hin.

## Claims

1. Method for stripping the coating (6) of at least one optical fiber (4, 10, 20, 43) with a stripping chemical product (3), contained in a receptable (1), comprising the following steps:

— introduction of a predetermined length of the fiber in the chemical product,

— immersion of said length for a predetermined time period,

— removal and cleaning of said immersed length of fiber,

characterized in that a container is used which container is closed by an elastic membrane (2) and in that, before the introduction of the fiber in the chemical product, the end of the fiber is brought into contact with the elastic membrane and the membrane is perforated to introduce the fiber, coating being held by the membrane inside the container during removal of the fiber.

2. Stripping method according to claim 1, characterized in that the chemical product (3) remains in contact with the membrane (2) throughout the duration of the stripping operation.

3. Method for stripping the coating (6) of at least one optical fiber (4, 10, 20, 43) with a stripping chemical product (3), comprising:

— a receptacle (1) containing said chemical product,

— means (11; 21; 44) for holding the optical fiber to be stripped,

characterized in that the receptacle is closed by an elastic membrane which can be perforated for introducing said optical fiber, and in that the device comprises means (11, 13; 21, 22; 44, 42) for conveying the fiber over a predetermined length.

4. Device according to claim 3, characterized in that the membrane (2) has a lip which can be opened from the outside by pressure.

5. Device according to one of claims 3 or 4, characterized in that the membrane (2) is in fluorosilicon or in fluorocarbon.

6. Device according to any one of claims 3 to 5, characterized in that the holding means are equipped with conveying tongs (11, 21, 44).

7. Device according to any one of claims 3 to 6, characterized in that the device further comprises an abutment (13, 22, 42) for limiting the portion of fiber (10; 20; 43) introduced in the receptacle (1) at a predetermined length.

8. Device according to any one of claims 3 to 7, characterized in that it further comprises elements (12. 23, 41) for guiding the fiber (10; 20; 43), said elements making it possible to prevent its buckling during the impact on the membrane (2).

9. Device according to claim 8, characterized in that the guiding elements are constituted by sliding sleeves (12).

10. Device according to claim 8, characterized in that the guiding elements comprise a striking member (23) placed between the membrane (2) and the end of the fiber to be stripped (20), the striking member being designed to perforate the membrane and to keep it open for free introduction of said fiber.

11. Device according to claim 8, characterized in that the guiding elements comprise two wheels (41) placed in front of the membrane (2) and designed to carry the fiber (43) toward the membrane.

## FIG_1-a

## FIG_1-b

## FIG_1-c

## FIG_1-d

## FIG_1-e

## FIG_2

# FIG_3-a

# FIG_3-b

# FIG_3-c

# FIG_3-d

# FIG_4-a

# FIG_4-b